(19)

**Europäisches Patentamt**
**European Patent Office**
**Office européen des brevets**

(11) **EP 4 686 536 A1**

(12) **EUROPEAN PATENT APPLICATION**

(43) Date of publication:
**04.02.2026 Bulletin 2026/06**

(21) Application number: **25151522.7**

(22) Date of filing: **13.01.2025**

(51) International Patent Classification (IPC):
**B25J 13/08** *(2006.01)* **B62D 57/032** *(2006.01)*

(52) Cooperative Patent Classification (CPC):
**B25J 13/085; B25J 13/081; B62D 57/032**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2024 CN 202411046603**

(71) Applicant: **Beijing Xiaomi Robot Technology Co., Ltd.**
**Beijing 100176 (CN)**

(72) Inventors:
• **XU, Tongye**
**Beijing, 100176 (CN)**
• **GUO, Wenping**
**Beijing, 100176 (CN)**
• **WEI, Xiaoliang**
**Beijing, 100176 (CN)**
• **CHEN, Yao**
**Beijing, 100176 (CN)**

(74) Representative: **Stöckeler, Ferdinand**
**Schoppe, Zimmermann, Stöckeler**
**Zinkler, Schenk & Partner mbB**
**Patentanwälte**
**Radlkoferstrasse 2**
**81373 München (DE)**

(54) **METHOD AND DEVICE FOR DETERMINING PRESSURE, ROBOT, MEDIUM AND PRODUCT**

(57) A method and device for determining a pressure, robot, medium and product, relate to the technical field of robots, where the method includes: obtaining (S11) a deformation parameter corresponding to at least one cantilever device on a robot foot device, where the deformation parameter represents a deformation state of the cantilever device generated in a case where the robot foot device is subjected to the pressure; determining (S12) a target position where the robot foot device is subjected to the pressure according to the deformation parameter; and determining (S13) a target pressure corresponding to the target position according to the deformation parameter and the target position.

Obtain a deformation parameter corresponding to at least one cantilever device on a robot foot device — S11

Determine a target position where the robot foot device is subjected to pressure according to the deformation parameter — S12

Determine a target pressure corresponding to the target position according to the deformation parameter and the target position — S13

FIG. 2

EP 4 686 536 A1

**Description**

TECHNICAL FIELD

The present invention relates to the technical field of robots, and in particular to a method and device for determining a pressure, a robot, a medium and a product.

BACKGROUND OF THE INVENTION

In recent years, with the advancement of society, science, and technology, robotics technology has been widely applied in various aspects of life. A motion capability of a legged robot is crucial in legged robot technology. Stability of motion of the robot can be effectively improved by dynamically detecting pressure information on the bottom of the robot's foot in real-time and applying the pressure information on the bottom of the robot's foot to robot control.

SUMMARY OF THE INVENTION

In order to solve the problem existing in the related art, the present invention provides a method and device for determining a pressure, a robot, a medium and a product.
According to a first aspect of an example of the present invention, a method for determining a pressure is provided. The method includes:

    obtaining a deformation parameter corresponding to at least one cantilever device on a robot foot device, where the deformation parameter represents a deformation state of the cantilever device generated in a case where the robot foot device is subjected to the pressure;
    determining a target position where the robot foot device is subjected to pressure according to the deformation parameter; and
    determining a target pressure corresponding to the target position according to the deformation parameter and the target position.

Alternatively, determining the target position where the robot foot device is subjected to pressure according to the deformation parameter includes:
determining, based on a first preset pressure correspondence relationship, the target position where the robot foot device is subjected to pressure according to the deformation parameter, where the first preset pressure correspondence relationship includes correspondence relationships between a plurality of preset deformation parameters and preset positions, and the preset positions include a plurality of position points on the robot foot device.
Alternatively, determining, based on the first preset pressure correspondence relationship, the target position where the robot foot device is subjected to pressure according to the deformation parameter includes:

    determining a candidate deformation parameter satisfying a preset condition from a plurality of preset deformation parameters in the first preset pressure correspondence relationship; and
    determining a candidate position corresponding to the candidate deformation parameter according to the first preset pressure correspondence relationship; and determining the candidate position as the target position where the robot foot device is subjected to pressure.

Alternatively, determining the candidate deformation parameter satisfying the preset condition from a plurality of preset deformation parameters in the first preset pressure correspondence relationship includes:

    determining a similarity between the deformation parameter and each preset deformation parameter; and
    determining a preset deformation parameter with a maximum similarity in a plurality of similarities as the candidate deformation parameter.

Alternatively, each of the plurality of preset deformation parameters include a unit vector corresponding to deformation of the cantilever device generated in a case where the robot foot device is subjected to the pressure; and the first preset pressure correspondence relationship is determined by the following methods:

    obtaining a plurality of deformation information corresponding to the cantilever device by applying a preset pressure to each preset position of a plurality of preset positions on the robot foot device; and
    determining the first preset pressure correspondence relationship according to the deformation information corresponding to each preset position.

Alternatively, determining the target pressure corresponding to the target position according to the deformation parameter and the target position includes:

    determining, based on a second preset pressure correspondence relationship, a target ratio corresponding to the target position according to the target position, where the second preset pressure correspondence relationship includes correspondence relationships between a plurality of preset positions and preset ratios, where the preset ratios are ratios of the preset deformation parameters at the preset positions to a preset pressure, and the preset positions include a plurality of position points on the robot foot device; and
    determining the target pressure corresponding to the target position according to the deformation parameter and the target ratio.

Alternatively, determining, based on the second preset pressure correspondence relationship, the target ratio corresponding to the target position according to the deformation parameter and the target position includes: determining a candidate ratio corresponding to the target position from a plurality of preset ratios in the second preset pressure correspondence relationship; and determining the candidate ratio as the target ratio corresponding to the target position.

Alternatively, the preset deformation parameter includes a linear relation parameter between each of the preset positions and the preset pressure for the cantilever device in a case where the robot foot device is subjected to pressure; and

the second preset pressure correspondence relationship is determined by the following methods: obtaining at least one deformation information corresponding to the cantilever device by applying the preset pressure to each of the preset positions on the robot foot device; determining the linear relation parameter between each of the preset positions and the preset pressure according to the deformation information corresponding to each of the preset positions; determining a ratio of the linear relation parameter corresponding to each of the preset positions to the preset pressure as the preset ratio; and determining the second preset pressure correspondence relationship according to the preset ratio corresponding to the each of the preset positions.

According to a second aspect of an example of the present invention, a device for determining a pressure is provided. The device includes:

an obtaining module, configured to obtain a deformation parameter corresponding to at least one cantilever device on a robot foot device, where the deformation parameter represents a deformation state of the cantilever device generated in a case where the robot foot device is subjected to the pressure; a first determination module, configured to determine a target position where the robot foot device is subjected to pressure according to the deformation parameter; and a second determination module, configured to determine a target pressure corresponding to the target position according to the deformation parameter and the target position.

Alternatively, the first determination module is configured to determine, based on a first preset pressure correspondence relationship, the target position where the robot foot device is subjected to pressure according to the deformation parameter, where the first preset pressure correspondence relationship includes correspondence relationships between a plurality of preset deformation parameters and preset positions, and the preset positions include a plurality of position points on the robot foot device.

Alternatively, the first determination module includes:

a first determination sub-module, configured to determine a candidate deformation parameter satisfying a preset condition from a plurality of preset deformation parameters in the first preset pressure correspondence relationship; and a second determination sub-module, configured to determine a candidate position corresponding to the candidate deformation parameter according to the first preset pressure correspondence relationship, and determine the candidate position as the target position where the robot foot device is subjected to pressure.

Alternatively, the second determination module includes:

a third determination sub-module, configured to determine, based on a second preset pressure correspondence relationship, a target ratio corresponding to the target position according to the target position, where the second preset pressure correspondence relationship includes correspondence relationships between a plurality of preset positions and preset ratios, where the preset ratios are ratios of the preset deformation parameters at the preset positions to a preset pressure, and the preset positions include a plurality of position points on the robot foot device; and a fourth determination sub-module, configured to determine the target pressure corresponding to the target position according to the deformation parameter and the target ratio.

According to a third aspect of an example of the present invention, a device for determining a pressure is provided. The device includes:

a processor; and a memory that stores processor-executable instructions, where the processor is configured to execute the processor-executable instructions to perform steps of the method for determining a pressure according to the first aspect of the present invention.

According to a fourth aspect of an example of the present invention, a legged robot is provided. The legged robot includes the device for determining a pressure according to the third aspect of the present invention.

According to a fifth aspect of an example of the present invention, a computer-readable storage medium is provided. The computer-readable storage medium stores computer program instructions, where the program instructions, when executed by a processor, cause the processor to:

obtain a deformation parameter corresponding to at least one cantilever device on a robot foot device, where the deformation parameter represents a deformation state of the cantilever device generated in a case where the robot foot device is subjected to the pressure;

determine a target position where the robot foot device is subjected to the pressure according to the deformation parameter; and
determine a target pressure corresponding to the target position according to the deformation parameter and the target position.

According to a sixth aspect of an example of the present invention, a computer program product is provided. The computer program product includes a computer program, where the computer program, when executed by a processor, implements steps of the method for determining a pressure according to the first aspect of the present invention.

The technical solutions according to the examples of the present invention may have the following beneficial effects:

the deformation parameter corresponding to the at least one cantilever device on the robot foot device is obtained, where the deformation parameter represents a deformation state of the cantilever device generated in a case where the robot foot device is subjected to the pressure; the target position where the robot foot device is subjected to pressure is determined according to the deformation parameter; and the target pressure corresponding to the target position is determined according to the deformation parameter and the target position. Thus, the pressure and a pressure position of the robot foot device may be determined by predetermined correspondence relationships between deformation and pressure, as well as between deformation and pressure position according to the deformation generated in a case where the cantilever device directly connected to the robot foot device is subjected to pressure, such that an incapability to accurately determine a pressure situation and a pressure distribution condition at an end caused by excessive joints from an electric motor arranged in a robot to the bottom (or bottom end) of the robot's foot may be avoided, and the pressure and the pressure position of the robot foot device may be more accurately and intuitively determined according to the deformation parameter corresponding to the cantilever device. Thus, stability of motion of the robot is improved.

It should be understood that the above general description and the following detailed description are only illustrative and explanatory, and do not limit the present invention.

BRIEF DESCRIPTION OF DRAWINGS

The accompanying drawings here are incorporated in the description as part of the description, illustrate the examples satisfying the present invention, and serve to explain the principles of the present invention together with the description.

FIG. 1 is a schematic structural diagram of a cantilever device shown according to an example.
FIG. 2 is a flow diagram of a method for determining a pressure shown according to an example.
Fig. 3 is a schematic structural diagram of another cantilever device shown according to an example.
FIG. 4 is a flow diagram of another method for determining a pressure shown according to an example.
FIG. 5 is a flow diagram of another method for determining a pressure shown according to an example.
FIG. 6 is a flow diagram of another method for determining a pressure shown according to an example.
FIG. 7 is a block diagram of a device for determining a pressure shown according to an example.
FIG. 8 is a block diagram of a first determination module shown according to the example shown in FIG. 7.
FIG. 9 is a block diagram of a second determination module shown according to the example shown in FIG. 7.
FIG. 10 is a block diagram of a device for determining a pressure shown according to an example.
FIG. 11 is a block diagram of a legged robot shown according to an example.

DETAILED DESCRIPTION OF THE INVENTION

The examples will be described in detail here and are illustratively shown in the accompanying drawings. When the following descriptions relate to the accompanying drawings, unless otherwise specified, the same numeral in different accompanying drawings denotes the same or similar element.

The embodiments described in the following examples of the present invention do not denote all possible embodiments consistent with the present invention. On the contrary, the embodiments are merely examples of a device and a method consistent with some aspects of the present invention as detailed in the appended claims.

Before the particular embodiments of the present invention are introduced in detail, an application scene of the present invention is described firstly. The present invention may be applied to a scene to determine the pressure on the bottom of the robot's foot of a robot. In recent years, with the advancement of society, science, and technology, robotics technology has been widely applied in various aspects of life. A motion capability of a legged robot is crucial in legged robot technology. Stability of motion of the robot can be effectively improved by dynamically detecting pressure information on the bottom of the robot's foot of the robot in real-time and applying the pressure information on the bottom of the robot's foot to robot control.

In the related art, force feedback at the bottom of the robot's foot is typically realized by torque control of an electric motor arranged at joints. Since there are numerous joints arranged between the electric motor in the robot to the bottom of the robot's foot, it is difficult to accurately determine a pressure situation and a pressure distribution situation at the end. As a result, the stability of motion of the robot is limited.

In the related art, information of the pressure of a robot foot device may be determined by the following methods 1 and 2.

Method 1: a pressure sensor may be mounted on the robot foot device, or a torque sensor may be mounted at a joint connected to the robot foot device. Information of pressure on the bottom of the robot's foot measured in the manner has high accuracy, but the mass of a robot foot may be increased by mounting the sensor, which is not conducive to the motion of a robot. Moreover, joints from an electric motor arranged in the robot to the bottom of the robot's foot are numerous, resulting in an incapability to accurately determine a pressure situation and a pressure distribution situation at the end.

Method 2, joint torque may be estimated by measuring joint current, to further measure information of pressure on the bottom of the robot's foot. By this method, high cost is involved, but estimated joint torque is more accurate in joints with large deceleration, while an error of estimated joint torque is larger in joints with small deceleration. Thus, measurement accuracy of the information of the pressure on the bottom of the robot's foot is further reduced.

In order to solve the technical problem existing in the above related art, the present invention provides a method and device for determining a pressure, a robot, a medium and a product. A deformation parameter corresponding to at least one cantilever device on a robot foot device is obtained, where the deformation parameter represents a deformation state of the cantilever device generated in a case where the robot foot device is subjected to the pressure; the target position where the robot foot device is subjected to pressure is determined according to the deformation parameter; and a target pressure corresponding to the target position is determined according to the deformation parameter and the target position. Thus, the pressure and a pressure position of the robot foot device may be determined by predetermined correspondence relationships between deformation and pressure, as well as between deformation and pressure position determined according to the deformation generated in a case where the cantilever device directly connected to the robot foot device is subjected to pressure, such that an incapability to accurately determine a pressure situation and a pressure distribution condition at an end caused by excessive joints from an electric motor arranged in a robot to the bottom of the robot's foot may be avoided, and the pressure and the pressure position of the robot foot device may be more accurately and intuitively determined according to the deformation parameter corresponding to the cantilever device. Thus, the stability of the robot's motion is improved.

In the scene to which the solution of the present invention is applied, the method for determining a pressure may be performed by a control device for a robot. The robot includes the control device, a robot foot device, and a cantilever device. The cantilever device is connected to the robot foot device, and the cantilever device deforms in a case where the robot foot device is subjected to pressure.

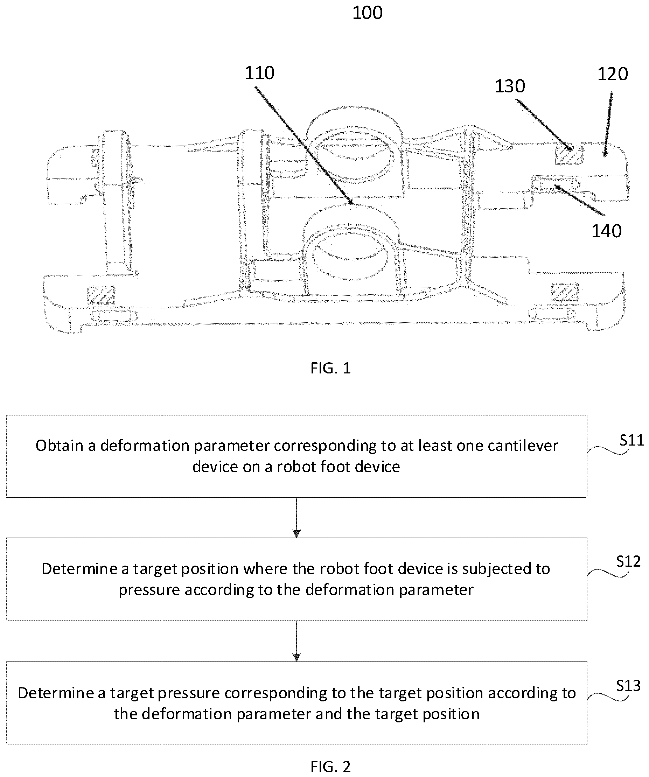

Alternatively, as shown in FIG. 1, a robot foot device 100 may include a foot skeleton 110. The foot skeleton 110 is used to be connected to a leg skeleton of a robot to support the robot to walk, at least one cantilever device 120 may be connected to an upper bottom surface of the foot skeleton 110, and the cantilever device 120 may include a cantilever beam. A pressure is transmitted to the cantilever beam by the robot foot device 100 in a case where the robot foot device 100 is subjected to pressure, and the cantilever beam may elastically deform when the transmitted pressure is applied to the cantilever beam. A strain gauge 130 is arranged at top of the cantilever beam, is used to measure elastic deformation of the cantilever beam, and may determine a measured value of the elastic deformation of each cantilever beam.

Further, the cantilever device further includes a deformation hole 140 and a protection assembly. A large pressure may be borne by the protection assembly to protect the cantilever beam in the cantilever device 120 and protect the cantilever beam from damage caused by overload.

For example, the cantilever beam deforms downwards when a pressure from above is applied to the cantilever beam. A protection assembly prevents the cantilever beam from continuing deformation when a threshold is exceeded by deformation to some extent. Thus, an overload protection function is achieved. The cantilever beam deforms upwards when a pressure from below is applied to the cantilever beam. The protection assembly contacts a pressure-equalizing plate to prevent the pressure-equalizing plate from continuing to apply an upward pressure to the cantilever beam when a threshold is exceeded by deformation to some extent, such that the cantilever beam is prevented from continuing deforming. Thus, an overload protection function is achieved.

The present invention will be described below with reference to the particular examples.

FIG. 2 is a flow diagram of a method for determining a pressure shown according to an example. The method for determining a pressure is performed by a control device for a robot. The control device may be an ordinary computer, a server, an intelligent terminal device, etc., or a vehicle-mounted terminal such as an on-board computer or an on-board industrial personal computer (IPC). As shown in FIG. 2, the method may include steps S11, S12 and S13.

In step S11, a deformation parameter corresponding to at least one cantilever device on a robot foot device is obtained.

The deformation parameter represents a deformation state of the cantilever device generated in a case where the robot foot device is subjected to the pressure.

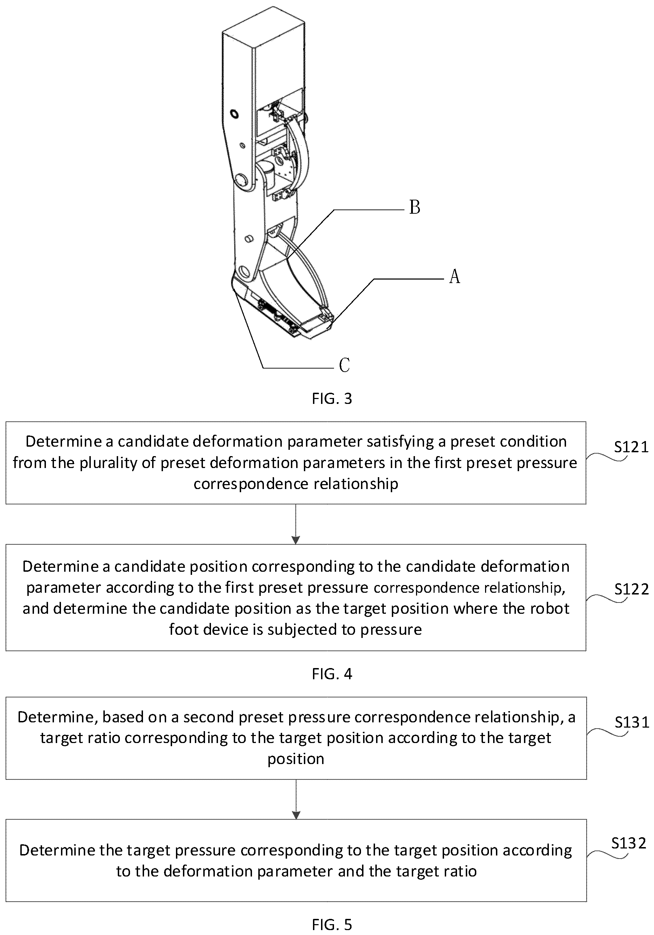

It should be noted that a plurality of cantilever devices may be connected to foot corner points of a circle of the robot foot device respectively. The foot corner points may include feature points around the robot foot device. As shown in FIG. 3, for example, foot corner points may include a plurality of feature points obtained around a robot foot device according to preset intervals, or points A, B, C ... etc. in FIG. 3, as long as points reflecting features around the robot foot device may be all used as the foot corner points.

In step S12, a target position where the robot foot device is subjected to pressure is determined according to the deformation parameter.

Considering that different pressures are transmitted by cantilever beams connected to different foot corner points of the robot foot device in a case where different positions of the robot foot device are subjected to pressure, elastic deformation of the connected cantilever beams is also different accordingly. Thus, the target position where the robot foot device is subjected to pressure may be determined according to the deformation parameter.

Alternatively, a first preset pressure correspondence relationship may be determined according to the obtained calibration parameter, and then the target position where the robot foot device is subjected to pressure is determined based on the first preset pressure correspondence relationship according to the deformation parameter.

The first preset pressure correspondence relationship includes correspondence relationships between a plurality of preset deformation parameters and preset positions, and the preset positions include a plurality of position points on the robot foot device.

In a possible implementation, each of the plurality of preset deformation parameters include a unit vector corresponding to deformation of the cantilever device generated in a case where the robot foot device is subjected to pressure.

Illustratively, the first preset pressure correspondence relationship may be determined by the following steps S101 and S102.

In step S101, a plurality of deformation information corresponding to the cantilever device are obtained by applying a preset pressure to each preset position of a plurality of preset positions on the robot foot device.

The deformation information may include a measured value of a strain gauge arranged on a cantilever beam.

A plurality of different preset positions may be predetermined on the robot foot device, and the preset positions may be the position points. Then, a preset pressure may be applied to different preset positions respectively, and the measured values of the strain gauges arranged on the cantilever beams in a case where the preset pressure is applied to different preset positions are obtained respectively.

For example, n position points may be uniformly marked on the robot foot device, which may be denoted as $p_1$, $p_2$, ..., $p_n$ in a case where the cantilever device includes four devices. When a pressure of F is applied to a position point $p_i$ ($1 \leq i \leq n$), the measured values of the corresponding four strain gauges may be obtained, which may be denoted as a vector X, where vector

$$X^{(i)} = \left[ x_1^{(i)}, x_2^{(i)}, x_3^{(i)}, x_4^{(i)} \right]$$

, where $X^{(i)}$ represents the measurement value of strain gauges corresponding to the position point $p_i$, $x_1^{(i)}$ represents the measurement value of the first strain gauge, $x_2^{(i)}$ represents the measurement value of the second strain gauge, $x_3^{(i)}$ represents the measurement value of the third strain gauge, and $x_4^{(i)}$ represents the measurement value of the fourth strain gauge.

In step S102, the first preset pressure correspondence relationship is determined according to the deformation information corresponding to each preset position.

Alternatively, the unit vector corresponding to each preset position may be determined according to the deformation information corresponding to each preset position.

For example, for each preset position, the unit vector corresponding to the preset position may be calculated according to the deformation information corresponding to the preset position.

For example, a vector corresponding to the deformation information at the preset position p is X = $[x_1, x_2, x_3, x_4]$, and the unit vector is

$$\hat{X} = \frac{X}{|X|} = \left[ \frac{x_1}{|X|}, \frac{x_2}{|X|}, \frac{x_3}{|X|}, \frac{x_4}{|X|} \right]$$

, where $x_1$ represents the deformation information of the first strain gauge, $x_2$ represents the deformation information of the second strain gauge, $x_3$ represents the deformation information of the third strain gauge, $x_4$ represents the deformation information of the fourth strain gauge, and IXI represents a modulus of the vector X.

Alternatively, the first preset pressure correspondence relationship may be determined according to the unit vector corresponding to the preset position.

It should be noted that considering that the unit vector is only related to a position to which the pressure is applied and unrelated to a magnitude of the applied pressure in a case where the preset deformation parameter includes the unit vector corresponding to the deformation of the cantilever device generated in a case where the robot foot device is subjected to pressure, the preset pressure may be the same or different accordingly.

In step S13, a target pressure corresponding to the target position is determined according to the deformation parameter and the target position.

Considering that different pressures are transmitted by the cantilever beams connected to different foot corner points of the robot foot device in a case where the same position of the robot foot device is subjected to pressure at different values of pressure, elastic deformation of the connected cantilever beams is also different accordingly. Thus, the target pressure corresponding to the target position of the robot foot device may be also determined according to the deformation parameter.

Alternatively, a second preset pressure correspondence relationship may be determined according to the obtained calibration parameter, and then the target pressure corresponding to the target position may be determined based on the second preset pressure correspondence relationship according to the deformation parameter and the target position.

The second preset pressure correspondence relationship includes correspondence relationships between a plurality of preset positions and preset ratios. For example, the preset ratios are ratios of the preset deformation parameters at the preset positions to a preset pressure, and the preset positions include the plurality of position points on the robot foot device.

In a possible implementation, the preset deformation parameters include a linear relation parameter between each of the preset positions and the preset pressure for the cantilever device in a case where the robot foot device is subjected to pressure. For example, the preset deformation parameters may include a vector modulus corresponding to the deformation of the cantilever device generated in a case where the robot foot device is subjected to pressure.

Illustratively, the second preset pressure correspondence relationship may be determined by the following steps S1, S2, S3 and S4.

In step S1, at least one deformation information corresponding to the cantilever device is obtained by applying the preset pressure to each of the preset positions on the robot foot device.

The deformation information may include a measured value of a strain gauge arranged on a cantilever beam.

A plurality of different preset positions may be predetermined on the robot foot device, and the preset positions may be the position points. Then, the preset pressure may be applied to different preset positions respectively, and the measured values of the strain gauges arranged on the cantilever beams in a case where the preset pressure is applied to different preset positions are obtained respectively. For example, n position points may be uniformly marked on the robot foot device, which may be denoted as $p_1, p_2, ... , p_n$ in a case where the cantilever device includes four devices. When a pressure of F is applied to a position point $p_i$ ($1 \leq i \leq n$), the measured values of the corresponding four strain gauges may be obtained, which may be denoted as a vector X,

where vector $X^{(i)} = \left[ x_1^{(i)}, x_2^{(i)}, x_3^{(i)}, x_4^{(i)} \right]$, where $X^{(i)}$ represents the measurement value of strain gauges corresponding to the position point $p_i$, $x_1^{(i)}$ represents the measurement value of the first strain gauge, $x_2^{(i)}$ represents the measurement value of the second strain gauge, $x_3^{(i)}$ represents the measurement value of the third strain gauge, $x_4^{(i)}$ represents the measurement value of the fourth strain gauge. For example, $|X| = \sqrt{x_1^2 + x_2^2 + x_3^2 + x_4^2}$, where $|X|$ represents a modulus of the vector X, X represents a vector corresponding to the deformation information at the preset position p, $x_1$ represents the deformation information of the first strain gauge, $x_2$ represents the deformation information of the second strain gauge, $x_3$ represents the deformation information of the third strain gauge, and $x_4$ represents the deformation information of the fourth strain gauge.

In step S2, a linear relation parameter between each of the preset positions and the preset pressure is determined according to the deformation information corresponding to each of the preset positions.

Alternatively, a vector modulus corresponding to the preset position to which the preset pressure is applied may be determined according to the deformation information corresponding to each preset position. Specifically, for each preset position, the vector modulus corresponding to the preset position to which the preset pressure is applied may be calculated according to the deformation information corresponding to the preset position.

For example, a vector corresponding to the deformation information at the preset position p is X = $[x_1, x_2, x_3, x_4]$, and the vector modulus corresponding to the preset position is $|X| = \sqrt{x_1^2 + x_2^2 + x_3^2 + x_4^2}$, where $x_1$ represents the deformation information of the first strain gauge, $x_2$ represents the deformation information of the second strain gauge, $x_3$ represents the deformation information of the third strain gauge, and $x_4$

represents the deformation information of the fourth strain gauge.

In step S3, a ratio of the linear relation parameter corresponding to each of the preset positions to the preset pressure is determined as the preset ratio.

Alternatively, the preset ratio corresponding to each of the preset positions may be determined according to the vector modulus corresponding to each of the preset positions to which the preset pressure is applied.

It should be noted that considering that the vector modulus is related to a magnitude of the applied pressure in a case where the preset deformation parameter include the vector modulus corresponding to deformation of the cantilever device generated in a case where the robot foot device is subjected to pressure, the preset ratio $r = F/|X|$ may be also related to a magnitude of the applied pressure accordingly. F is the preset pressure, and $|X|$ is the vector modulus corresponding to the preset position to which the preset pressure is applied.

In step S4, the second preset pressure correspondence relationship is determined according to the preset ratio corresponding to each of the preset positions.

By using the technical solution described above, a deformation parameter corresponding to the cantilever device is obtained; a target position where the robot foot device is subjected to the pressure is determined according to the deformation parameter; and a target pressure corresponding to the target position is determined according to the deformation parameter and the target position. Thus, the pressure and a pressure position of the robot foot device may be determined by predetermined correspondence relationships between deformation and pressure, as well as between deformation and pressure position according to the deformation generated in a case where the cantilever device directly connected to the robot foot device is subjected to pressure, such that an incapability to accurately determine a pressure situation and a pressure distribution condition at an end caused by excessive joints from an electric motor arranged in a robot to the bottom of the robot's foot may be avoided, and the pressure and the pressure position of the robot foot device may be more accurately and intuitively determined according to the deformation parameter corresponding to the cantilever device. Thus, stability of motion of the robot is improved.

In some examples, as shown in FIG. 4, S12 may include the following steps S121 and S122.

In step S121, a candidate deformation parameter satisfying a preset condition is determined from the plurality of preset deformation parameters in the first preset pressure correspondence relationship.

The preset condition may include a maximum similarity to the deformation parameter.

Alternatively, a similarity between the deformation parameter and each preset deformation parameter may be determined, and then a preset deformation parameter with a maximum similarity in a plurality of similarities is determined as the candidate deformation parameter.

The deformation parameter may include a unit vector corresponding to deformation of the cantilever device generated in a case where the robot foot device is subjected to pressure.

Illustratively, the obtained deformation parameter corresponding to the cantilever device may be represented as $\hat{X}$, a plurality of preset deformation parameters in the first preset pressure correspondence relationship may be represented as $\hat{X}^{(1)}, \hat{X}^{(2)}, \ldots, \hat{X}^{(n)}$, and the similarity between $\hat{X}$ and $\hat{X}^{(i)}$ may be calculated according to the following formula (1), where $1 \leq i \leq n$.

$\hat{x}_1$ represents the deformation parameter of the first strain gauge, $\hat{x}_2$ represents the deformation parameter of the second strain gauge, $\hat{x}_3$ represents the deformation parameter of the third strain gauge, $\hat{x}_4$ represents the deformation parameter of the fourth strain gauge, $\hat{x}_1^{(i)}$ represents the preset deformation parameter of the first strain gauge, $\hat{x}_2^{(i)}$ represents the preset deformation parameter of the second strain gauge, $\hat{x}_3^{(i)}$ represents the preset deformation parameter of the third strain gauge, and $\hat{x}_4^{(i)}$ represents the preset deformation parameter of the fourth strain gauge.

In some examples, the preset deformation parameter with the maximum similarity in a plurality of similarities may be determined as the candidate deformation parameter.

In step S122, a candidate position corresponding to the candidate deformation parameter is determined according to the first preset pressure correspondence relationship, and the candidate position is determined as the target position where the robot foot device is subjected to pressure.

By using the technical solution described above, the target position where the robot foot device is subjected to pressure may be obtained by calculating the similarity between the obtained deformation parameter corresponding to the cantilever device and the preset deformation parameter corresponding to each preset position such that the target position where the robot foot device is subjected to pressure may be simply and accurately determined. Moreover, a calculation workload is small, and thus calculation efficiency is improved.

In some examples, as shown in FIG. 5, S13 may include steps S131 and S132.

In step S131, a target ratio corresponding to the target position is determined based on a second preset pressure correspondence relationship according to the target position.

The second preset pressure correspondence relationship includes correspondence relationships between a plurality of preset positions and preset ratios, the preset ratios are ratios of the preset deformation parameters at the preset positions to a preset pressure, and the preset positions include the plurality of position points on the robot foot device.

The preset deformation parameters may include a vector modulus corresponding to deformation of the cantilever device generated in a case where the robot foot device is subjected to pressure.

Alternatively, a candidate ratio corresponding to the target position may be determined from a plurality of preset deformation parameters in the second preset pressure correspondence relationship, and the candidate ratio may be determined as a target deformation parameter corresponding to the target position.

Illustratively, a plurality of the preset ratios in the second preset pressure correspondence relationship may be represented as $r_1$, $r_2$, $r_3$,..., $r_n$, where $r_n=F/|Xn|$, $r_n$ represents a preset ratio corresponding to position point $p_n$, F represents a preset pressure, and $|Xn|$ represents a vector modulus corresponding to position point $p_n$. The target ratio $r_a=F/|Xa|$ corresponding to the target position may be obtained, where F represents a preset pressure, and $|Xa|$ represents a vector modulus corresponding to the target position.

In step S132, the target pressure corresponding to the target position is determined according to the deformation parameter and the target ratio.

Illustratively, the obtained deformation parameter corresponding to the cantilever device may be represented as $|Xa|$. Thus, the target pressure Fa may be represented as: $Fa=r_a\times|Xa|$, where $r_a$ represents the target ratio corresponding to the target position.

By using the technical solution described above, the target pressure of the robot foot device at the target position may be obtained by calculating the obtained deformation parameter corresponding to the cantilever device and the preset ratio corresponding to the target position such that the target pressure of the robot foot device at the target position may be simply and accurately determined. Moreover, a calculation workload is small, and thus calculation efficiency is improved. Further, the same accuracy may be ensured at any pressure by utilizing a relation that a vector modulus is directly proportional to the pressure.

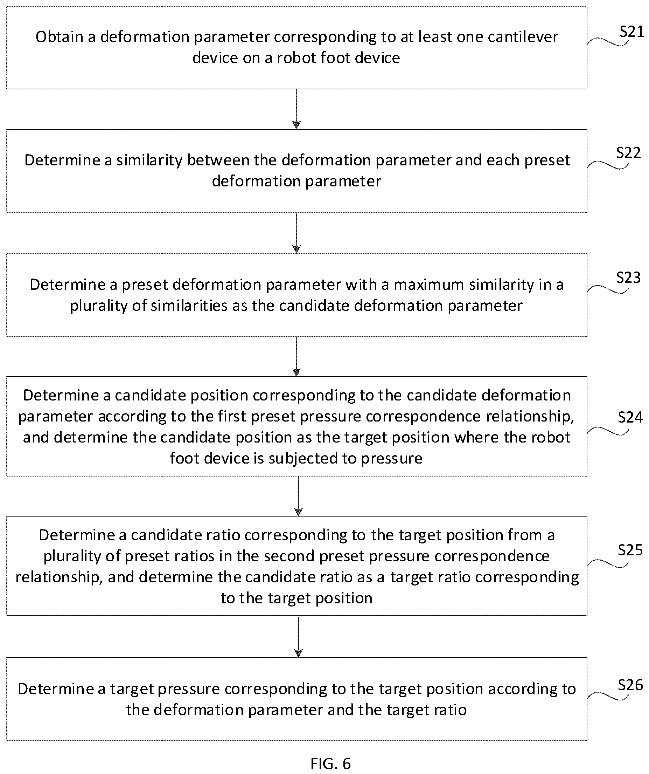

FIG. 6 is a flow diagram of another method for determining a pressure shown according to an example. The method for determining a pressure is performed by a control device for a robot. The robot includes a robot foot device and a cantilever device. The cantilever device is connected to the robot foot device, and the cantilever device deforms in a case where the robot foot device is subjected to pressure. As shown in FIG. 6, the method for determining a pressure may include steps S21-S26.

In step S21, a deformation parameter corresponding to at least one cantilever device on a robot foot device is obtained.

In step S22, a similarity between the deformation parameter and each preset deformation parameter is determined.

The deformation parameter may include a unit vector corresponding to deformation of the cantilever device generated in a case where the robot foot device is subjected to pressure.

In step S23, a preset deformation parameter with a maximum similarity in a plurality of similarities is determined as the candidate deformation parameter.

In step S24, a candidate position corresponding to the candidate deformation parameter is determined according to the first preset pressure correspondence relationship, and the candidate position is determined as the target position where the robot foot device is subjected to pressure.

The first preset pressure correspondence relationship includes correspondence relationships between a plurality of preset deformation parameters and preset positions, and the preset positions include the plurality of position points on the robot foot device.

In step S25, a candidate ratio corresponding to the target position is determined from a plurality of preset ratios in the second preset pressure correspondence relationship, and the candidate ratio is determined as a target ratio corresponding to the target position.

The second preset pressure correspondence relationship includes correspondence relationships between a plurality of preset positions and preset ratios, the preset ratios are ratios of the preset deformation parameters at the preset positions to a preset pressure, and the preset positions include the plurality of position points on the robot foot device.

In step S26, a target pressure corresponding to the target position is determined according to the deformation parameter and the target ratio.

By using the technical solution described above, a deformation parameter corresponding to the cantilever device is obtained; a target position where the robot foot device is subjected to the pressure is determined according to the deformation parameter; and a target pressure corresponding to the target position is determined according to the deformation parameter and the target position. Thus, the pressure and a pressure position of the robot foot device may be determined by predetermined correspondence relationships between deformation and pressure, as well as between deformation and pressure position according to the deformation generated in a case where the cantilever device directly connected to the robot foot device is subjected to pressure, such that an incapability to accurately determine a pressure situation and a pressure distribution condition at an end caused by excessive joints from an electric motor arranged in a robot to the bottom of the robot's foot may be avoided, and the pressure and the pressure position of the robot foot device may be more accurately and intuitively determined according to the deformation parameter corresponding to the cantilever device. Thus, stability of motion of the robot is improved.

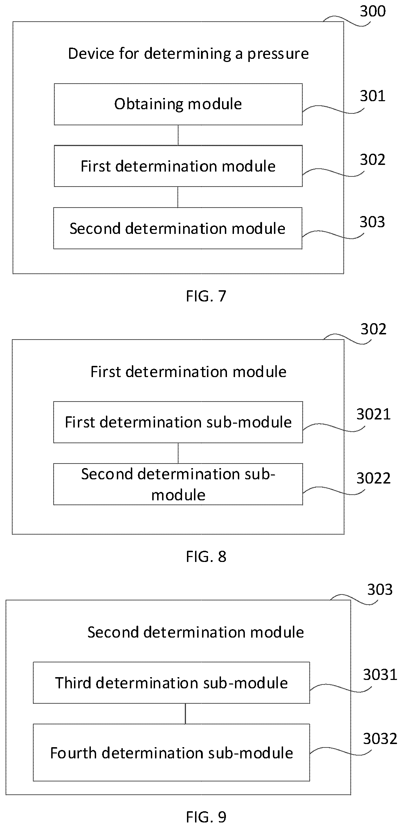

FIG. 7 is a block diagram of a device for determining a pressure shown according to an example. With reference to FIG. 7, the device for determining a pressure 300 includes an obtaining module 301, a first determination module 302 and a second determination module 303.

The obtaining module 301 is configured to obtain a deformation parameter corresponding to at least one cantilever device on a robot foot device, where the deformation parameter represents a deformation state of the cantilever device generated in a case where the robot foot device is subjected to the pressure;

> the first determination module 302 is configured to determine a target position where the robot foot device is subjected to pressure according to the deformation parameter; and
> the second determination module 303 is configured to determine a target pressure corresponding to the target position according to the deformation parameter and the target position.

Alternatively, the first determination module 302 is configured to determine, based on a first preset pressure correspondence relationship, the target position where the robot foot device is subjected to pressure according to the deformation parameter, where the first preset pressure correspondence relationship includes correspondence relationships between a plurality of preset deformation parameters and preset positions, and the preset positions include the plurality of position points on the robot foot device.

FIG. 8 is a block diagram of a first determination module shown according to an example shown in FIG. 7. As shown in FIG. 8, the first determination module 302 includes a first determination sub-module 3021 and a second determination sub-module 3022.

> a first determination sub-module 3021, configured to determine a candidate deformation parameter satisfying a preset condition from the plurality of preset deformation parameters in the first preset pressure correspondence relationship; and
> a second determination sub-module 3022, configured to determine a candidate position corresponding to the candidate deformation parameter according to the first preset pressure correspondence relationship, and determine the candidate position as the target position where the robot foot device is subjected to pressure.

Alternatively, the first determination sub-module 3021 is configured to determine a similarity between the deformation parameter and each preset deformation parameter; and determine a preset deformation parameter with a maximum similarity in a plurality of similarities as the candidate deformation parameter.

Alternatively, each of the plurality of preset deformation parameters include a unit vector corresponding to deformation of the cantilever device generated in a case where the robot foot device is subjected to pressure; and the first preset pressure correspondence relationship is determined by the following methods:

a plurality of deformation information corresponding to the cantilever device are obtained by applying a preset pressure to each preset position of a plurality of preset positions on the robot foot device; and the first preset pressure correspondence relationship is determined according to the deformation information corresponding to each preset position.

FIG. 9 is a block diagram of a second determination module shown according to an example shown in FIG. 7. As shown in FIG. 9, the second determination module 303 includes a third determination sub-module 3031 and a fourth determination sub-module 3032.

> a third determination sub-module 3031, configured to determine, based on a second preset pressure correspondence relationship, a target ratio corresponding to the target position according to the target position, where the second preset pressure correspondence relationship includes correspondence relationships between a plurality of preset positions and preset ratios, the preset ratios are ratios of the preset deformation parameters at the preset positions to a preset pressure, and the preset positions include the plurality of position points on the robot foot device; and
> a fourth determination sub-module 3032, configured to determine the target pressure corresponding to the target position according to the deformation parameter and the target ratio.

Alternatively, the third determination sub-module 3031 is configured to determine a candidate ratio corresponding to the target position from a plurality of preset ratios in the second preset pressure correspondence relationship, and determine the candidate ratio as the target ratio corresponding to the target position.

Alternatively, the preset deformation parameters include a linear relation parameter between each of preset positions and the preset pressure for the cantilever device in a case where the robot foot device is subjected to pressure; and the second preset pressure correspondence relationship is determined by the following methods:

> at least one deformation information corresponding to the cantilever device is obtained by applying the preset pressure to each of the preset positions on the robot foot device;
> the linear relation parameter between each of the preset positions and the preset pressure is determined according to the deformation information corresponding to each of the preset positions;
> a ratio of the linear relation parameter corresponding to the preset position to the preset pressure is determined as the preset ratio; and

the second preset pressure correspondence relationship is determined according to the preset ratio corresponding to the preset position.

By using the device, a deformation parameter corresponding to the cantilever device is obtained; a target position where the robot foot device is subjected to the pressure is determined according to the deformation parameter; and a target pressure corresponding to the target position is determined according to the deformation parameter and the target position. Thus, the pressure and a pressure position of the robot foot device may be determined by predetermined correspondence relationships between deformation and pressure, as well as between deformation and pressure position according to the deformation generated in a case where the cantilever device directly connected to the robot foot device is subjected to pressure, such that incapability to accurately determine a pressure situation and a pressure distribution condition at an end caused by excessive joints from an electric motor arranged in a robot to the bottom of the robot's foot may be avoided, and the pressure and the pressure position of the robot foot device may be more accurately and intuitively determined according to the deformation parameter corresponding to the cantilever device. Thus, the stability of the robot's motion is improved.

For the device in the example above, a specific mode for each module to execute an operation has been described in detail in the examples relating to the method, which will not be repeated here.

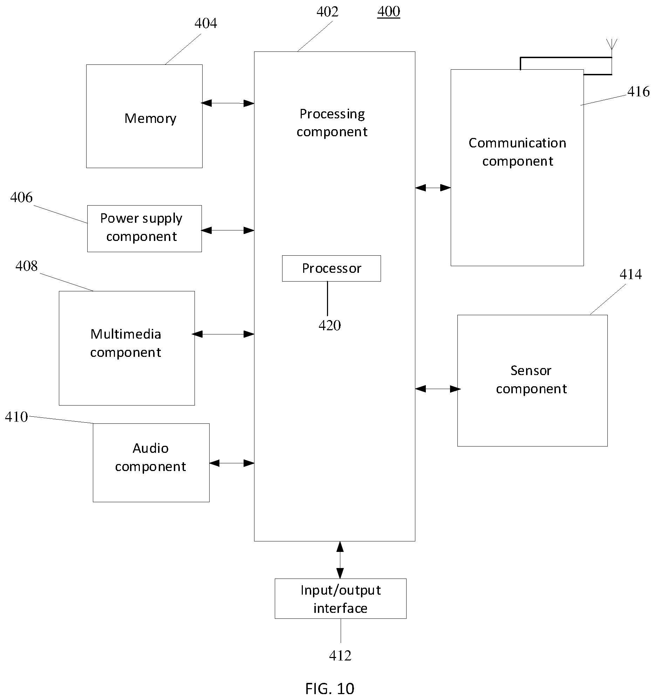

FIG. 10 is a block diagram of a device 400 for determining a pressure shown according to an example. For example, the device 400 may be a mobile phone, a computer, a digital broadcast terminal, a message sending and receiving device, a game console, a tablet device, a medical device, a fitness device, a personal digital assistant, etc.

With reference to FIG. 10, the device 400 may include one or more of the following components: a processing component 402, a memory 404, a power supply component 406, a multimedia component 408, an audio component 410, an input/output interface 412, a sensor component 414 and a communication component 416.

Overall operations of the device 400, such as operations associated with display, phone calls, data communications, camera operations and recording operations, are generally controlled by the processing component 402. The processing component 402 may include one or more processors 420 to execute instructions to complete all or some of steps of the method described above. Further, the processing component 402 may include one or more modules that facilitate interaction between the processing component 402 and other components. For example, the processing component 402 may include a multimedia module, so as to facilitate interaction between the multimedia component 408 and the processing component 402.

The memory 404 is configured to store various types of data to support operations at the device 400. Examples of such data include instructions, contact data, phone book data, messages, pictures, videos, etc., for any application or method operated on the device 400. The memory 404 may be implemented by any type of volatile or non-volatile storage device, or a combination of any type of volatile or non-volatile storage device, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

Power is provided by the power supply component 406 for various components of the device 400. The power supply component 406 may include a power management system, one or more power supplies, and other components associated with generation, management and distribution of power for the device 400.

The multimedia component 408 includes a screen that provides an output interface between the device 400 and a user. In some examples, a screen may include a liquid crystal display (LCD) and a touch panel (TP). If the screen includes the TP, the screen may be implemented as a touch screen to receive an input signal from a user. The TP includes one or more touch sensors to sense touching, swiping, and gestures on the TP. A boundary of a touch or swiping action may be sensed by the touch sensor, and duration and pressure associated with a touching or swiping operation may be further detected by the touch sensor. In some examples, a multimedia component 408 includes a front camera and/or a rear camera. When the device 400 is in an operation mode, such as a photographing mode or a video mode, external multimedia data may be received by the front camera and/or the rear camera. Each front camera and each rear camera may be a fixed optical lens system or have a focal length and an optical zoom capability.

The audio component 410 is configured to output and/or input an audio signal. For example, the audio component 410 includes a microphone (MIC). The MIC is configured to receive an external audio signal when the device 400 is in an operating mode, such as a call mode, a recording mode, and a voice recognition mode. The received audio signal may be further stored in the memory 404 or sent via the communication component 416. In some examples, an audio component 410 further includes a loudspeaker for outputting an audio signal.

An interface is provided by the input/output interface 412 between the processing component 402 and a peripheral interface module. The peripheral interface module described above may be a keyboard, a click wheel, a button, etc. The button may include, but not limited to, a home button, a volume button, a start button, and a lock button.

The sensor component 414 includes one or more sensors, configured to provide state assessments of various aspects of the device 400. For example, an open/closed state of the device 400, and a relative positioning effect of components may be detected by the sensor component 414. For example, the component is a display and a keypad of the device 400. A change in the position of the device 400 or a component of the device 400, presence or absence of the user making contact with the device 400, orientation or acceleration/deceleration of the device 400, and a change in temperature of the device 400 may be further detected by the sensor component 414. The sensor component 414 may include a proximity sensor configured to detect the presence of nearby objects without any physical contact. The sensor component 414 may further include a light sensor, such as a complementary metal-oxide-semiconductor (CMOS) image sensor or a charge coupled device (CCD) image sensor, used in imaging applications. In some examples, a sensor component 414 may further include an acceleration sensor, a gyro sensor, a magnetic sensor, a pressure sensor, or a temperature sensor.

The communication component 416 is configured to facilitate communication between the device 400 and other devices in a wired or wireless manner. A wireless network based on a communication standard, such as wireless fidelity (WiFi), second-generation (2G), third-generation (3G), or a combination of the WiFi, the 2G and the 3G, may be accessed by the device 400. In an example, a broadcast signal or broadcast related information from an external broadcast management system is received by a communication component 416 via a broadcast channel. In an example, a communication component 416 further includes a near field communication (NFC) module to facilitate short range communication. For example, the NFC module may be implemented on the basis of a radio frequency identification (RFID) technology, an infrared data association (IrDA) technology, a ultra wide band (UWB) technology, a Bluetooth (BT) technology, and other technologies.

In an example, a device 400 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, micro-processors, or other electronic elements, and is configured to execute the method described above.

In an example, a non-transitory computer-readable storage medium including instructions is further provided, such as a memory 404 including instructions. The instructions are executable by a processor 420 of a device 400, so as to complete any of the methods described above. For example, the non-transitory computer-readable storage medium may be a ROM, a random access memory (RAM), a compact disc read-only memory (CD-ROM), a magnetic tape, a floppy disk, an optical data storage device, etc.

In another example, a computer program product is further provided. The computer program product includes a computer program executable by a programmable device. The computer program has code parts for executing the method for determining a pressure described above when executed by the programmable device.

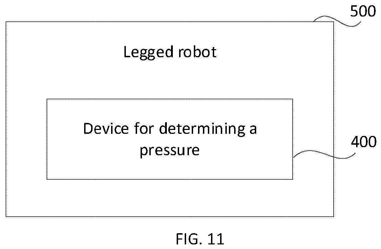

FIG. 11 is a block diagram of a legged robot 500 shown according to an example. The legged robot 500 includes the device 400 for determining a pressure described above.

In the above detailed description, reference is made to the accompanying drawings, which illustrate specific aspects of the present invention that may be practiced by illustration. In this regard, the terms indicating directions or representing positional relations, such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," may be used with reference to the orientation of the figure described. Since components of the described device may be positioned in a plurality of different orientations, directional terms may be used for illustrative purposes rather than restrictive purposes. It should be understood that other aspects may be utilized and structural or logical changes may be made without departing from the concept of the present invention. Thus, the following detailed description should not be considered as a limiting meaning.

It should be understood that unless otherwise specified, the features of various examples of the present invention may be combined with each other. As used here, the term "and/or" includes any one of related listed items and any combination of any two or more of the related listed items; and similarly, "at least one of..." includes any one of the related listed items and any combination of any two or more of the related listed items.

It should be understood that unless expressly specified and defined otherwise, the terms "engage," "attach," "mount," "connect," "connected," "fix," etc. used in the examples of the present invention are to be construed broadly. For instance, they may denote fixed connection, detachable connection or integral formation, denote mechanical connection, electrical connection or mutual communication, denote direct connection or indirect connection by an intermediate medium, or denote communication between interiors of two elements or interaction between two elements, unless expressly defined otherwise. For those of ordinary skill in the art, the specific meanings of the above terms here may be understood according to specific circumstances.

In addition, the term "above" used in components, elements, or material layers formed "above" a surface or located "above" a surface may be used to indicate that the components, the elements or the material layers are "indirectly" positioned (for example, placed, formed, deposited, etc.) on the surface, such that one or more additional components, elements, or layers are arranged between the surface and the components, the elements, or the material layers. However, the term "above" used in the components, the elements, or the material layers formed "above" the surface or located "above" the surface may further alternatively have a specific meaning: the components, the elements, or the material layers are "directly" positioned (for example, placed, formed, deposited, etc.) on the surface, such as making direct contact with the surface.

Although the terms such as "first," "second," and "third," may be used here to describe various members, components, regions, layers, or sections, these members, components, regions, layers, or sections are not limited by these terms. On the contrary, these terms are merely used to distinguish one member, component, region, layer, or section from another member, component, region, layer, or section. Thus, a first member, component, region, layer, or section mentioned in the examples described here may be also referred to as a second member, component, region, layer, or section without departing from the teachings of each example. In addition, the terms "first" and "second" are merely for descriptive purposes and are not to be construed as indicating or implying their relative importance or implicitly specifying the number of indicated technical features. Thus, a feature defined with "first" and "second" can explicitly or implicitly include at least one of the features. In the description here, "plurality" means at least two, for example, two, three, etc., unless expressly specified otherwise.

It should be understood that spatial relative terms such as "above," "upper," "below," and "lower," used here describe a relation between one element shown in the figure and another element. The spatial relative terms are further intended to including different orientations of the device in use or operation in addition to the orientations described in the accompanying drawings. For example, if the device in the accompanying drawings is flipped, an element "above" or "at an upper portion" relative to another element is described as the element "below" or "at a lower portion" relative to another element. Thus, the term "above" includes both above and below orientations according to the spatial orientation of the device. The device may have other orientations (such as rotating by 90 degrees or being in other orientations), and the spatial relative terms used here should be explained accordingly.

In addition, the term "illustrative" used here represents an example, instance, or diagram. Any aspect or design described as "illustrative" here is not necessarily understood to be advantageous in comparison to other aspects or designs. On the contrary, the use of the word "illustrative" is intended to present concepts in a specific way. As used here, the term "or" is intended to represent inclusive "or" rather than exclusive "or". That is, unless otherwise specified or clear from the context, "X applies A or B" is intended to represent any one of natural inclusive arrangements. That is, if A is applied to X; B is applied to X; or both A and B are applied to X, "A or B is applied to X" is satisfied in any one of the above instances. In addition, unless otherwise specified or clearly pointed to in the singular form from the context, the articles "a", "an," and "one," used in the application and the appended claims are generally understood to represent "one or more".

Similarly, although the present invention has been shown and described with respect to one or more implementations, those skilled in the art will consider equivalent variations and modifications after reading and understanding the description and the accompanying drawings. The present invention includes all such modifications and variations, and is limited only by the scope of the claims. Especially regarding various functions executed by the components (such as elements, resources, etc.) described above, unless otherwise indicated, the terms used to describe such components are intended to correspond to any component (functionally equivalent) that executes the specific function of the described component, even if the terms are not structurally equivalent to the disclosed structure. In addition, although specific features of the present invention may have been disclosed with respect to only one of several implementations, these features may be combined with one or more other features of other implementations as desired and advantageous to any given or specific application. Furthermore, with regard to the terms "comprise," "include," "possess," "have," "be," or variations used in particular embodiments or the claims, such terms are intended to be inclusive like the terms "comprise" and "include".

**Claims**

1. A method for determining a pressure, comprising:

   obtaining (S11; S21) a deformation parameter corresponding to at least one cantilever device on a robot foot device, wherein the deformation parameter represents a deformation state of the cantilever device generated in a case where the robot foot device is subjected to the pressure; determining (S12) a target position where the robot foot device is subjected to the pressure according to the deformation parameter; and determining (S13; S26) a target pressure corresponding to the target position according to the deformation parameter and the target position.

2. The method according to claim 1, wherein determining (S12) the target position where the robot foot device is subjected to the pressure according to the deformation parameter comprises:
   determining, based on a first preset pressure correspondence relationship, the target position where the robot foot device is subjected to the pressure according to the deformation parameter, wherein the first preset pressure correspondence relationship comprises correspondence relationships between a plurality of preset deformation parameters and preset positions, and the preset positions comprise a plurality of position points on the robot foot device.

3. The method according to claim 2, wherein determining, based on the first preset pressure correspondence relationship, the target position where the robot foot device is subjected to the pressure according to the deformation parameter comprises:

    determining (S121) a candidate deformation parameter satisfying a preset condition from the plurality of preset deformation parameters in the first preset pressure correspondence relationship;
    determining (S121; S24) a candidate position corresponding to the candidate deformation parameter according to the first preset pressure correspondence relationship; and
    determining the candidate position as the target position where the robot foot device is subjected to the pressure.

4. The method according to claim 3, wherein determining (S121) the candidate deformation parameter satisfying the preset condition from the plurality of preset deformation parameters in the first preset pressure correspondence relationship comprises:

    determining (S22) a similarity between the deformation parameter and each preset deformation parameter; and
    determining (S23) a preset deformation parameter with a maximum similarity in a plurality of similarities as the candidate deformation parameter.

5. The method according to any one of claims 2 to 4, wherein each of the plurality of preset deformation parameters comprise a unit vector corresponding to deformation of the cantilever device generated in a case where the robot foot device is subjected to the pressure; and the first preset pressure correspondence relationship is determined by:

    obtaining a plurality of deformation information corresponding to the cantilever device by applying a preset pressure to each preset position of a plurality of preset positions on the robot foot device; and
    determining the first preset pressure correspondence relationship according to the deformation information corresponding to each preset position.

6. The method according to any one of claims 1 to 5, wherein determining the target pressure corresponding to the target position according to the deformation parameter and the target position comprises:

    determining (S131), based on a second preset pressure correspondence relationship, a target ratio corresponding to the target position according to the target position, wherein the second preset pressure correspondence relationship comprises correspondence relationships between a plurality of preset positions and preset ratios, wherein the preset ratios are ratios of the preset deformation parameters at the preset positions to a preset pressure, and the preset positions comprise a plurality of position points on the robot foot device; and
    determining (S132) the target pressure corresponding to the target position according to the deformation parameter and the target ratio.

7. The method according to claim 6, wherein determining, based on the second preset pressure correspondence relationship, the target ratio corresponding to the target position according to the target position comprises:

    determining (S25) a candidate ratio corresponding to the target position from a plurality of preset ratios in the second preset pressure correspondence relationship; and
    determining the candidate ratio as the target ratio corresponding to the target position.

8. The method according to claim 6 or 7, wherein the preset deformation parameter comprises a linear relation parameter between each of the preset positions and the preset pressure for the cantilever device in a case where the robot foot device is subjected to the pressure; and
    the second preset pressure correspondence relationship is determined by:

    obtaining at least one deformation information corresponding to the cantilever device by applying the preset pressure to each of the preset positions on the robot foot device;
    determining the linear relation parameter between each of the preset positions and the preset pressure according to the deformation information corresponding to each of the preset positions;
    determining a ratio of the linear relation parameter corresponding to each of the preset positions to the preset pressure as the preset ratio;

and determining the second preset pressure correspondence relationship according to the preset ratio corresponding to the each of the preset positions.

9. A device for determining a pressure (300), comprising:

an obtaining module (301), configured to obtain a deformation parameter corresponding to at least one cantilever device on a robot foot device, wherein the deformation parameter represents a deformation state of the cantilever device generated in a case where the robot foot device is subjected to the pressure;
a first determination module (302), configured to determine a target position where the robot foot device is subjected to the pressure according to the deformation parameter; and
a second determination module (303), configured to determine a target pressure corresponding to the target position according to the deformation parameter and the target position.

10. The device according to claim 9, the first determination module (302) is configured to:
determine, based on a first preset pressure correspondence relationship, the target position where the robot foot device is subjected to the pressure according to the deformation parameter, wherein the first preset pressure correspondence relationship comprises correspondence relationships between a plurality of preset deformation parameters and preset positions, and the preset positions comprise a plurality of position points on the robot foot device.

11. The device according to claim 10, the first determination module (302) comprises:

a first determination sub-module (3021), configured to determine a candidate deformation parameter satisfying a preset condition from the plurality of preset deformation parameters in the first preset pressure correspondence relationship;
a second determination sub-module (3022), configured to determine a candidate position corresponding to the candidate deformation parameter according to the first preset pressure correspondence relationship; and determine the candidate position as the target position where the robot foot device is subjected to the pressure.

12. The device according to any one of claims 9 to 11, the second determination module (303) comprises:

a third determination sub-module (3031), configured to determine, based on a second preset pressure correspondence relationship, a target ratio corresponding to the target position according to the target position, wherein the second preset pressure correspondence relationship comprises correspondence relationships between a plurality of preset positions and preset ratios, wherein the preset ratios are ratios of the preset deformation parameters at the preset positions to a preset pressure, and the preset positions comprise a plurality of position points on the robot foot device; and
a fourth determination sub-module (3032), configured to determine the target pressure corresponding to the target position according to the deformation parameter and the target ratio.

13. A legged robot (500), comprising a device (400) for determining a pressure, the device (400) for determining a pressure comprises:

a processor (420); and
a memory (404) that stores processor-executable instructions, wherein
the processor (420), when executing the processor-executable instructions, is configured to perform the method according to any one of claims 1 to 8.

14. A computer-readable storage medium storing a computer program, wherein the computer program, when executed by a processor (420), causes the processor (420) to:

obtain a deformation parameter corresponding to at least one cantilever device on a robot foot device, wherein the deformation parameter represents a deformation state of the cantilever device generated in a case where the robot foot device is subjected to the pressure;
determine a target position where the robot foot device is subjected to the pressure according to the deformation parameter; and
determine a target pressure corresponding to the target position according to the deformation parameter and the target position.

15. A computer program product comprising a computer program, wherein the computer program, when executed by a processor (420), implements the method according to any one of claims 1 to 8.

100

110                                              130        120

                                                           140

FIG. 1

| Obtain a deformation parameter corresponding to at least one cantilever device on a robot foot device | S11 |

| Determine a target position where the robot foot device is subjected to pressure according to the deformation parameter | S12 |

| Determine a target pressure corresponding to the target position according to the deformation parameter and the target position | S13 |

FIG. 2

FIG. 3

| Determine a candidate deformation parameter satisfying a preset condition from the plurality of preset deformation parameters in the first preset pressure correspondence relationship | S121 |
| --- | --- |

| Determine a candidate position corresponding to the candidate deformation parameter according to the first preset pressure correspondence relationship, and determine the candidate position as the target position where the robot foot device is subjected to pressure | S122 |
| --- | --- |

FIG. 4

| Determine, based on a second preset pressure correspondence relationship, a target ratio corresponding to the target position according to the target position | S131 |
| --- | --- |

| Determine the target pressure corresponding to the target position according to the deformation parameter and the target ratio | S132 |
| --- | --- |

FIG. 5

| Obtain a deformation parameter corresponding to at least one cantilever device on a robot foot device | S21 |

| Determine a similarity between the deformation parameter and each preset deformation parameter | S22 |

| Determine a preset deformation parameter with a maximum similarity in a plurality of similarities as the candidate deformation parameter | S23 |

| Determine a candidate position corresponding to the candidate deformation parameter according to the first preset pressure correspondence relationship, and determine the candidate position as the target position where the robot foot device is subjected to pressure | S24 |

| Determine a candidate ratio corresponding to the target position from a plurality of preset ratios in the second preset pressure correspondence relationship, and determine the candidate ratio as a target ratio corresponding to the target position | S25 |

| Determine a target pressure corresponding to the target position according to the deformation parameter and the target ratio | S26 |

FIG. 6

**Device for determining a pressure** — 300

**Obtaining module** — 301

**First determination module** — 302

**Second determination module** — 303

FIG. 7

**First determination module** — 302

**First determination sub-module** — 3021

**Second determination sub-module** — 3022

FIG. 8

**Second determination module** — 303

**Third determination sub-module** — 3031

**Fourth determination sub-module** — 3032

FIG. 9

404

402    400

Memory

Processing
component

Communication
component

416

406

Power supply
component

Processor

408

420

Multimedia
component

Sensor
component

414

410

Audio
component

Input/output
interface

412

FIG. 10

500

Legged robot

Device for determining a
pressure

400

FIG. 11

Europäisches
Patentamt
European
Patent Office
Office européen
des brevets

# EUROPEAN SEARCH REPORT

**Application Number**

EP 25 15 1522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 126181 B2 (-) 26 August 2022 (2022-08-26) * the whole document * ----- | 1,9,14, 15 | INV. B25J13/08 B62D57/032 |
| X | US 2022/355465 A1 (KODA YUTA [JP] ET AL) 10 November 2022 (2022-11-10) * the whole document * ----- | 1,9 | |
| X | JP 3 400377 B2 (FUJITSU LTD) 28 April 2003 (2003-04-28) * the whole document * ----- | 1,9 | |
| X | WO 2022/009961 A1 (SONY INTERACTIVE ENTERTAINMENT INC [JP]) 13 January 2022 (2022-01-13) * the whole document * ----- | 1-12 | |
| A | CN 210 757 742 U (ZHEJIANG LAB) 16 June 2020 (2020-06-16) * the whole document * ----- | 1,9 | |
| | | | TECHNICAL FIELDS SEARCHED (IPC) |
| | | | B25J B62D |

The present search report has been drawn up for all claims

| Place of search | Date of completion of the search | Examiner |
|---|---|---|
| Munich | 26 May 2025 | Vázquez Cabello, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 4 686 536 A1**

## ANNEX TO THE EUROPEAN SEARCH REPORT
## ON EUROPEAN PATENT APPLICATION NO.

EP 25 15 1522

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | | Publication date | Patent family member(s) | | Publication date |
|---|---|---|---|---|---|
| JP 7126181 | B2 | 26-08-2022 | JP | 7126181 B2 | 26-08-2022 |
| | | | JP | WO2021079847 A1 | 29-04-2021 |
| | | | US | 2022314467 A1 | 06-10-2022 |
| | | | WO | 2021079847 A1 | 29-04-2021 |
| US 2022355465 | A1 | 10-11-2022 | JP | 7126182 B2 | 26-08-2022 |
| | | | JP | WO2021079848 A1 | 29-04-2021 |
| | | | US | 2022355465 A1 | 10-11-2022 |
| | | | WO | 2021079848 A1 | 29-04-2021 |
| JP 3400377 | B2 | 28-04-2003 | JP | 3400377 B2 | 28-04-2003 |
| | | | JP | 2000254888 A | 19-09-2000 |
| WO 2022009961 | A1 | 13-01-2022 | JP | 7542623 B2 | 30-08-2024 |
| | | | JP | WO2022009961 A1 | 13-01-2022 |
| | | | WO | 2022009961 A1 | 13-01-2022 |
| CN 210757742 | U | 16-06-2020 | NONE | | |

EPO FORM P0459

For more details about this annex : see Official Journal of the European Patent Office, No. 12/82